# FASCICULE DE BREVET EUROPEEN

(11) **EP 0 943 855 B1**
(45) Date de publication et mention de la délivrance du brevet: **04.06.2003**
(21) Numéro de dépôt: 99400490.1
(22) Date de dépôt: 01.03.1999
(51) Int. Cl.: F16L 37/08, F16L 37/084

(54) **Procédé de raccordement de conduits tubulaires et dispositif permettant sa mise en oeuvre**
Verfahren zum Verbinden von Rohrleitungen und Vorrichtung zur Ausführung des Verfahrens
Method for connecting tubular conduits and device for carrying out the method

(30) Priorité: 19.03.1998 FR 9803376
(43) Date de publication de la demande: 22.09.1999
(73) Titulaire: Qualetude S.A., 62660 Beuvry (FR)
(72) Inventeur: Garat, Paul, 62400 Bethune (FR)
(74) Mandataire: Breese, Pierre

(56) Documents cités:
- EP-A- 0 833 093
- FR-A- 1 049 913
- FR-A- 1 249 628
- US-A- 3 413 021

## Description

La présente invention concerne un procédé de raccordement de conduits tubulaires ainsi que le dispositif permettant la mise en oeuvre de ce procédé.
Ce procédé convient à tous les types de tubes et notamment à ceux utilisés pour l'évacuation de gaz, de liquides ou de fumées quel que soit le matériau dans lequel les tubes sont réalisés.

L'art antérieur le plus proche de l'invention est constitué par le brevet français No. 1 247 652 qui concerne un dispositif de raccordement de deux tubes souples. Chaque tube comporte à son extrémité un élément de raccord susceptible de coopérer avec un élément de raccordement porté par le tube à raccorder.
Les éléments de raccordement sont réalisés dans un matériau souple et ont une forme sensiblement en tronc de cône. L'élément dit femelle comporte à sa base une partie annulaire plate formant une collerette sur laquelle l'élément mâle peut venir s'appuyer après avoir été engagé par glissement dans l'élément femelle.
L'inconvénient majeur de ce type de dispositif réside dans le fait qu'il n'est utilisable qu'avec des tubes souples dont le diamètre reste faible et qu'il ne prévoit pas de dispositif de désengagement rapide des tubes raccordés.
On connaît aussi dans l'art antérieur des procédés de raccordement qui consistent à solidariser deux tubes au moyen de filetages ou de visseries. Cependant cette solution reste réservée à des tuyaux rigides.
Une autre solution consiste à emmancher les deux tubes à solidariser par des moyens aptes à coopérer comme par exemple des manchons mâle et femelle. Il est alors souvent nécessaire d'assurer la solidarisation des deux tubes au moyen d'un organe de serrage du type d'un collier par exemple. Cette solution convient à des tuyaux flexibles.
L'art antérieur connaît aussi le document EP 833 093, présentant une date de dépôt antérieure à la date de priorité du présent brevet, mais publié postérieurement à la date de priorité du présent brevet. Ce document, opposable uniquement à la nouveauté du présent brevet, présente un procédé de raccordement tubulaire à l'aide d'un élément mâle et d'un élément femelle, lesdits éléments présentant chacun une nervure circulaire ayant une section transversale dégageante, aptes à coopérer entre elles et une jupe externe déformable élastiquement.
Ainsi, les procédés de l'art antérieur comportent de nombreux inconvénients.
Du fait des matériaux utilisés et de la configuration des éléments de raccordement, l'étanchéité de la zone de raccordement est assurée par des joints onéreux, de forme complexe.
De plus, les procédés de raccordement connus nécessitent souvent la présence de plusieurs opérateurs pour mener à bien les différentes phases de raccordement.
Dans le cadre de certaines applications, les tuyaux et notamment les éléments de raccordement, doivent présenter une configuration extérieure s'opposant le moins possible à leur introduction dans un conduit type maçonné.
Enfin, le coût engendré par l'adjonction d'éléments de raccordement doit être aussi faible que possible.

Le but de la présente invention est de remédier à ces inconvénients en proposant un procédé pour le raccordement de conduits tubulaires selon la revendication 1.
Ce procédé consiste à prolonger les extrémités des conduits à raccorder par des moyens complémentaires de raccordement, lesdits moyens étant constitués d'une part, par un élément de raccordement tubulaire femelle, placé dans le prolongement du tube qui le porte, du type formant une collerette évasée terminée par un épaulement rentrant sensiblement transversal et d'autre part, par un élément de raccordement tubulaire mâle, placé dans le prolongement du tube qui le porte, dont la partie distale est apte à venir coopérer avec l'épaulement transversal de l'élément femelle.

L'élément de raccordement tubulaire femelle présente en outre une pièce tubulaire d'appui rapportée, conique en coupe transversale, propre à venir s'appuyer sur la partie latérale de l'élément de raccordement tubulaire mâle.

De plus, le procédé de raccordement selon l'invention comprend la mise en oeuvre d'un élément de raccordement tubulaire mâle apte à coopérer avec un élément de raccordement tubulaire femelle correspondant.
Dans une forme de réalisation avantageuse du procédé de l'invention, l'élément de raccordement tubulaire mâle présente une section sensiblement en forme de crosse dont la partie distale fait avec le tube qui la porte un angle aigu.
Dans une autre forme de réalisation avantageuse du procédé de l'invention, l'élément de raccordement tubulaire mâle présente une section de forme sensiblement trapézoïdale en coupe transversale.

Le procédé pour le raccordement de conduits tubulaires selon l'invention peut être utilisé avec des conduits tubulaires dont l'un au moins des prolongements est réalisé sous forme de pièces additionnelles fixées à l'extrémité des conduits tubulaires.
Dans une autre forme de mise en oeuvre, le procédé pour le raccordement de conduits tubulaires selon l'invention utilise des conduits tubulaires dont les prolongements sont réalisés par déformation des extrémités des conduits tubulaires.

L'objet de la présente invention se rapporte aussi à un premier type de conduit tubulaire raccordable à un conduit tubulaire complémentaire du type comportant un moyen de raccordement, tel que revendiqué dans la revendication 6. Ce premier type de conduit raccordable présente à son extrémité de raccordement un prolongement tubulaire femelle de la forme d'une collerette évasée terminée par un épaulement rentrant sensiblement transversal.
Dans une forme particulière de réalisation, l'épaulement rentrant est de longueur variable. La circonférence du conduit tubulaire peut donc présenter en alternance des portions présentant un épaulement dont la longueur varie.
Dans un mode de réalisation avantageux de l'invention, le prolongement femelle présente en outre une pièce tubulaire d'appui rapportée, conique en coupe transversale formant un retour coudé vers l'intérieur du conduit tubulaire.
De manière toute préférentielle, le conduit tubulaire portant l'élément de raccordement femelle présente une expansion latérale permettant à la pièce tubulaire d'appui conique de ne pas diminuer le diamètre ou de limiter la diminution du conduit tubulaire qui la porte.

La présente invention concerne également un second type de conduit tubulaire raccordable à un conduit tubulaire complémentaire, tel que revendiqué dans les revendications 9 et 10. Le second type- de conduit tubulaire selon l'invention présente à son extrémité de raccordement un moyen de raccordement mâle apte à coopérer avec un élément de raccordement tubulaire femelle correspondant.
Dans une première forme de réalisation, le conduit tubulaire raccordable à un conduit tubulaire complémentaire du type comportant un moyen de liaison présente à son extrémité de raccordement une section sensiblement en forme de crosse dont la partie distale fait avec le tube qui la porte un angle aigu.
De manière avantageuse, l'angle formé par la partie distale de la crosse et le tube qui la porte est compris entre 15 et 45°.
Dans cette forme de réalisation, l'élément de raccordement tubulaire mâle présente une section sensiblement en forme de crosse comprenant 5 parties continues successives constituant pour la première un prolongement du tube qui la porte, pour la seconde un rétrécissement de la section du tube, pour la troisième un évasement du tube formant dans sa partie distale un retour coudé vers l'extérieur, pour la quatrième partie un prolongement dudit retour faisant avec le tube qui la porte un angle aigu, préférentiellement compris entre 15 et 45° et pour la cinquième partie une extrémité rentrante sensiblement transversale.

Dans une seconde forme de réalisation, le conduit tubulaire raccordable à un conduit tubulaire complémentaire présente à son extrémité un moyen de raccordement de section sensiblement trapézoïdale.

La base de cette section trapézoïdale orientée vers l'extrémité du conduit tubulaire présente une discontinuité dans sa partie la plus externe. Cette caractéristique permet à la partie externe du moyen de raccordement de bénéficier d'une latitude de mouvement importante et de faciliter les opérations de raccordement et de séparation des conduits tubulaires de l'invention.
Dans une forme de réalisation particulière, la discontinuité s'étend à toute la base orientée vers l'extérieur.
Dans une forme de réalisation préférée de l'invention, la base la plus étroite est disposée à l'extrémité du conduit tubulaire, de manière à autoriser une coopération plus étroite entre le moyen de raccordement mâle et le moyen de raccordement femelle.
De manière particulièrement avantageuse, la base supérieure du trapèze ainsi que le coté non parallèle interne sont formés par un prolongement longitudinal du conduit tubulaire qui les porte et la base inférieure du trapèze et le côté non parallèle. externe sont formés par une pièce rapportée à l'extérieur dudit conduit tubulaire. Le côté non parallèle externe comporte éventuellement un prolongement transversal interne.

Les éléments de raccordement mâle et femelle selon l'invention sont solidarisés aux conduits tubulaires par tout moyen connu de l'homme du métier. Ainsi, les éléments de raccordement peuvent être fixés aux conduits tubulaires par des visseries ou par une technique choisie parmi la soudure, le sertissage, l'emboutissage et le collage.

Des moyens de butée sont également prévus sur les conduits tubulaires. Ils sont destinés à permettre un ajustement optimal des éléments de raccordement par rapport à l'extrémité des tubes qui les portent.

L'avantage du procédé selon l'invention réside dans le fait qu'il permet de réaliser rapidement un raccordement étanche entre deux conduits tubulaires.
De plus, la main d'oeuvre et le matériel nécessaires à la mise en oeuvre du procédé selon l'invention sont réduits au minimum du fait de la simplicité des opérations de mise en place du dispositif de raccordement des conduits tubulaires.

Un autre avantage du procédé selon l'invention réside dans la géométrie adoptée par les moyens complémentaires de raccordement. La configuration de l'association du moyen de raccordement mâle et du moyen de liaison femelle correspondant ne permet pas aux liquides éventuellement présents dans les gaz évacués de se condenser au sein du dispositif de raccordement.

Un avantage supplémentaire du procédé selon l'invention provient de la faiblesse de l'encombrement tant externe qu'interne que génèrent les moyens de raccordement complémentaires selon l'invention. Cette caractéristique permet d'une part d'introduire les conduits tubulaires dans des ouvrages maçonnés étroits, du type cheminée et d'autre part prévient l'accumulation de matières corrosives susceptibles d'endommager le conduit en n'offrant aucune zone de rétention de ces matières.

Un dernier avantage procuré par le procédé selon l'invention est la faiblesse du coût de la réalisation du dispositif pour la mise en oeuvre du procédé. La géométrie des moyens de raccordement complémentaires selon l'invention est aisément conférée à l'extrémité des conduits tubulaires par l'homme du métier à l'aide de presses dont l'utilisation lui est connue.

Pour mettre en oeuvre le procédé selon l'invention, il faut disposer les conduits tubulaires à raccorder dans le prolongement l'un de l'autre et les rapprocher de manière à faire coopérer les moyens de raccordement situés sur un conduit tubulaire avec les moyens de raccordement complémentaires situés sur le conduit tubulaire en vis-à-vis. Lorsque les moyens de raccordement sont au contact l'un de l'autre, l'extrémité distale de la crosse coopère avec l'épaulement transversal de l'extrémité de la collerette évasée et assure de cette manière le maintien optimal et l'étanchéité du raccordement.

Pour séparer deux conduits tubulaires raccordés par le procédé selon l'invention, l'utilisateur peut d'une part, exercer une traction sur le retour intérieur du moyen de raccordement femelle ou sur l'épaulement rentrant transversal dudit moyen de raccordement ou d'autre part, lorsque l'épaulement rentrant est de longueur variable, opérer une flexion du moyen de raccordement mâle par rapport au moyen de raccordement femelle.

D'autres caractéristiques et avantages du procédé de raccordement selon l'invention ressortiront de la description non limitative des figures qui suit dans laquelle:
- la figure 1 représente une vue de détail des moyens de raccordement femelle et mâle du dispositif de l'invention dans le second exemple de mise en oeuvre du procédé selon l'invention.
- les figures 2a et 2b représentent des vues de détail des moyens de raccordement femelle et mâle du dispositif de l'invention dans une variante de mise en oeuvre du procédé selon l'invention.
- La figure 3 représente une vue de deux conduits tubulaires équipés des moyens de raccordement femelle et mâle du dispositif de l'invention dans le premier exemple de mise en oeuvre du procédé selon l'invention.

Le dispositif de raccordement pour la mise en oeuvre du procédé selon l'invention se subdivise en deux types de moyens de raccordement complémentaires, le premier dit moyen de raccordement femelle, le second dit moyen de raccordement mâle, chacun porté par une extrémité des conduits tubulaires à raccorder.

Les moyens de raccordement, montés sur les conduits tubulaires, peuvent être solidarisés à l'intérieur ou l'extérieur des conduit tubulaire par tout moyen connu de l'homme du métier, par exemple par des visseries, par soudure, sertissage, emboutissage ou collage. Mais la configuration des moyens de raccordement leur permet aussi d'être facilement formés à l'extrémité des conduits tubulaires par tout moyen connu de l'homme du métier, par exemple par une presse.
Le moyen de raccordement femelle fixé sur le conduit tubulaire 1 se compose de deux éléments 11 et 12.
L'élément 11 constitue un prolongement du conduit tubulaire 1. Il est de section circulaire et épouse la circonférence du conduit tubulaire 1. Sur une coupe longitudinale du dispositif de raccordement selon l'invention, il forme un retour coudé vers l'extérieur du conduit tubulaire 1. Sur une coupe transversale du dispositif selon l'invention, il forme une collerette évasée.
Une première extrémité 11a de l'élément 11 est solidarisée au conduit tubulaire 1 par tout moyen connu de l'homme du métier.
La seconde extrémité 11b de l'élément 11, formant le retour coudé, porte dans sa partie terminale un épaulement rentrant 11c sensiblement transversal par rapport au conduit tubulaire 1.
L'épaulement rentrant 11c peut être de longueur variable. Ainsi la circonférence du conduit tubulaire peut présenter en alternance des portions présentant un épaulement dont la longueur est inégale.

L'élément 12 constitue un prolongement du conduit tubulaire 1. Il est de section circulaire et épouse la circonférence du conduit tubulaire 1. Sur une coupe longitudinale du dispositif selon l'invention, il forme un retour coudé vers l'intérieur du conduit tubulaire 1. Sur une coupe transversale du dispositif de raccordement selon l'invention, il prend la forme d'une pièce tubulaire d'appui de forme conique.
Le conduit tubulaire 1 peut encore comporter une expansion latérale 40 de sorte que la partie cylindrique 12 de l'élément de raccordement femelle ne provoque pas de diminution du diamètre du conduit tubulaire 1 au niveau du raccordement.
L'association des éléments 11 et 12 résulte dans la formation d'un organe femelle ayant sensiblement une forme de "V" en coupe longitudinale.

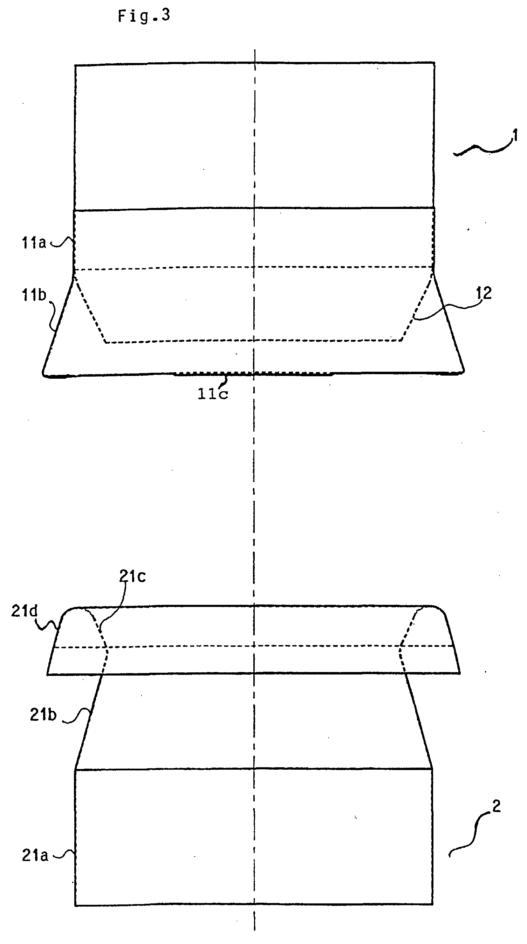

Dans une première forme de réalisation, illustrée figure 3, le moyen de liaison mâle, monté sur le tube 2, se compose d'un élément 21 en forme de crosse constituée de quatre parties continues et successives.

La partie 21a est de section transversale circulaire et constitue un prolongement du tube 2.
La partie 21b succède à la partie 21a. Elle est de forme conique et constitue sur une coupe longitudinale, un retour coudé vers l'intérieur du tube 2 dont elle réduit la section.
La partie 21c succède à la partie 21b. Elle prend la forme d'un évasement du tube 2. Dans sa partie distale par rapport à l'extrémité du tube 2, 21c initie un retour coudé à environ 180° vers l'extérieur du tube 2. .
La partie 21d succède à la partie 21c et prolonge le retour coudé formé par la partie distale de 21c L'extrémité 21d de la crosse forme un retour vers l'extérieur du tube et fait avec le tube 2 un angle aigu c'est à dire compris entre 0 et 90°, préférentiellement compris entre 15 et 45°. Une extrémité rentrante transversale prolonge 21d et permet une coopération avec l'épaulement 11c.
Le moyen de liaison mâle 21 présente donc, en coupe longitudinale, une forme de crosse apte à coopérer avec le moyen de liaison femelle formé par l'association des éléments 11 et 12 qui a sensiblement une forme de "V" en coupe longitudinale.

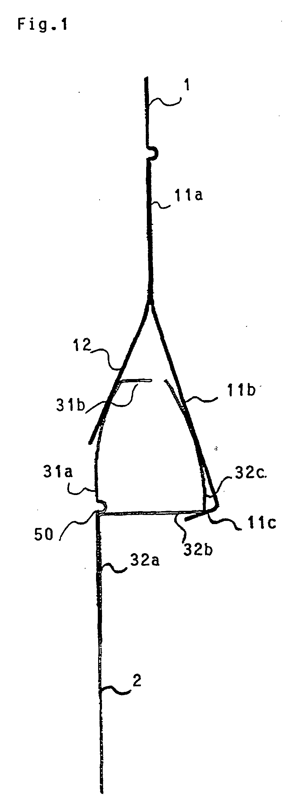

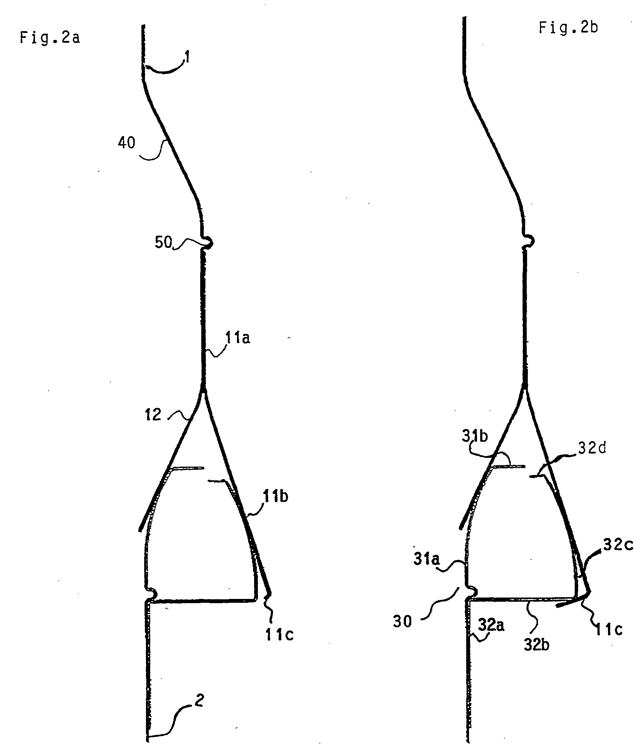

Une seconde forme de réalisation du moyen de raccordement mâle, illustrée figures 1, 2a et 2b, monté sur le conduit tubulaire 2, se compose d'un élément 30 de forme trapézoïdale. Le trapèze est orienté de telle sorte que ses deux bases parallèles 31b, 32b, sont sensiblement perpendiculaires à la paroi du conduit tubulaire 2.
Le moyen de raccordement mâle se compose de deux éléments distincts 31 et 32. Un premier élément 31 est constitué par un prolongement du conduit tubulaire 2. Il comprend une première partie 31a qui forme le côté non parallèle interne du trapèze et une seconde partie 31b qui constitue la base du trapèze la plus proche de l'extrémité du conduit tubulaire. La partie 31b est utile pour le maintien d'une certaine rigidité tant de l'élément de raccordement mâle que de l'ensemble des éléments mâle et femelle lorsqu'ils sont assemblés.
Le second élément 32 se compose de quatre parties successives et continues 32a, 32b, 32c, 32d. La première partie 32a est colinéaire au conduit tubulaire 2 et fait contact avec lui. Elle permet la fixation de l'élément 30 au conduit tubulaire 2. La seconde partie 32b est sensiblement perpendiculaire à la paroi du conduit tubulaire 2 et constitue la base du trapèze la plus éloignée de l'extrémité du conduit tubulaire 2. La troisième partie 32c forme le côté parallèle externe du moyen de raccordement mâle de section trapézoïdale. Une quatrième partie 32d peut venir avantageusement compléter l'élément 30. L'élément 32d est un prolongement transversal de 32d placé dans un plan parallèle et légèrement inférieur au plan de la partie 31b.
L'élément de raccordement mâle de section sensiblement trapézoïdale présente donc une forme le rendant apte à coopérer avec l'élément de raccordement femelle.

Lorsque l'on a raccordé les deux conduits tubulaires 1 et 2 par le dispositif de raccordement selon l'invention, les parties composant l'élément femelle viennent prendre appui sur les parties composant l'élément mâle. La coopération de ces parties permet de constituer un raccordement étanche des deux conduits tubulaires.
Lorsque le dispositif de raccordement est en cours d'utilisation, l'extrémité distale de l'élément de raccordement mâle vient faire pression sur l'épaulement rentrant 11c et permet ainsi la tenue du dispositif selon l'invention.
La partie 11c peut être de longueur variable, ce qui autorise une modulation de la facilité de séparation des deux conduits tubulaires.

La séparation des éléments de raccordement peut s'effectuer, d'une part en exerçant une traction sur le retour intérieur du moyen de raccordement femelle ou sur l'épaulement rentrant transversal dudit moyen de raccordement ou, d'autre part, lorsque l'épaulement rentrant est de longueur variable, en opérant une flexion du moyen de raccordement mâle par rapport au moyen de raccordement femelle.

Les conduits tubulaires portant les éléments de raccordement peuvent être munis de butées 50, destinées à permettre un ajustement optimal des éléments de raccordement par rapport à l'extrémité des tubes qui les portent.

Outre la faiblesse de son coût, le dispositif selon l'invention présente l'avantage d'éviter le recueil ou la pénétration de substances corrosives en son sein. Il permet en outre l'engagement des conduits de l'invention dans des ouvrages étroits du type des cheminées. Ceci est principalement la conséquence de la configuration originale des différents moyens de raccordement qui entrent en coopération et de la faiblesse de l'encombrement interne et externe qu'ils entraînent.

## Revendications

1. Procédé pour le raccordement de conduits tubulaires (1, 2) consistant à prolonger les extrémités des conduits à raccorder par des moyens complémentaires de liaison, **caractérisé en ce que** lesdits moyens sont constitués d'une part par un élément de raccordement tubulaire femelle, placé dans le prolongement du tube (1) qui le porte, du type ayant sensiblement une forme en V en coupe longitudinale, un élément (11) du V formant une collerette évasée vers l'extérieur, terminée par un épaulement rentrant (11c) sensiblement transversal, l'autre élément (12) du V formant une pièce tubulaire d'appui, conique, coudée vers l'intérieur dudit élément, et d'autre part par un élément de raccordement tubulaire mâle (21, 30), placé dans le prolongement du tube (2) qui le porte, dont la partie distale est complémentaire de l'élément de raccordement tubulaire femelle et vient s'appuyer sur l'épaulement transversal (11c) de l'élément de raccordement tubulaire femelle.

2. Procédé selon la revendication 1, **caractérisé en ce que** l'élément de raccordement tubulaire mâle (21) présente une section sensiblement en forme de crosse dont la partie distale fait avec l'axe du tube (2) qui la porte un angle aigu de préférence compris entre 15 et 45°.

3. Procédé selon la revendication 1, **caractérisé en ce que** l'élément de raccordement tubulaire mâle (30) présente une section de forme sensiblement trapézoïdale en coupe transversale.

4. Procédé pour le raccordement de conduits tubulaires selon l'une quelconque des revendications 1 à 3, **caractérisé en ce que** l'un au moins des prolongements est réalisé par déformation des extrémités des conduits tubulaires (1, 2).

5. Procédé pour le raccordement de conduits tubulaires selon l'une quelconque des revendications 1 à 3, **caractérisé en ce que** l'un au moins des prolongements est réalisé sous forme de pièces additionnelles fixées à l'extrémité des conduits tubulaires (1, 2).

6. Conduit tubulaire (1) raccordable à un conduit tubulaire (2) complémentaire du type comportant un moyen de raccordement, **caractérisé en ce qu'**il présente à son extrémité de raccordement un prolongement tubulaire femelle, placé dans le prolongement du tube (1) qui le porte, du type ayant sensiblement une forme en V en coupe longitudinale, un élément (11) du V formant une collerette évasée vers l'extérieur, terminée par un épaulement rentrant (11c) sensiblement transversal, l'autre élément (12) du V formant une pièce tubulaire d'appui, conique, coudée vers l'intérieur.

7. Conduit tubulaire (1) selon la revendication 6, **caractérisé en ce que** l'épaulement rentrant (11c) sensiblement transversal est de longueur variable sur sa circonférence.

8. Conduit tubulaire (1) selon la revendication 6 ou 7, **caractérisé en ce qu'**il présente une expansion latérale (40) permettant à la pièce tubulaire d'appui conique de limiter la diminution du diamètre du conduit tubulaire qui la porte.

9. Conduit tubulaire (2) raccordable à un conduit tubulaire (1) complémentaire du type comportant un moyen de liaison, **caractérisé en ce qu'**il présente à son extrémité de raccordement une section en forme de crosse comprenant 5 parties continues successives constituant pour la première partie (21a) un prolongement du tube (2) qui la porte, pour la seconde partie (21b) un rétrécissement de la section du tube (2), pour la troisième partie (21c) un évasement du tube (2) formant dans sa partie distale un retour coudé vers l'extérieur, pour la quatrième partie (21d) un prolongement dudit retour faisant avec le tube (2) qui la porte un angle par rapport à l'axe du tube (2) qui la porte un angle, compris entre 0 et 90°, préférentiellement compris entre 15 et 45° et pour la cinquième partie une extrémité rentrante sensiblement transversale.

10. Conduit tubulaire (2) raccordable à un conduit tubulaire (1) complémentaire du type comportant un moyen de raccordement, **caractérisé en ce qu'**il présente à son extrémité de raccordement un élément de raccordement (30) de section sensiblement trapézoïdale en coupe transversale, présentant deux bases parallèles (31b, 32b).

11. Conduit tubulaire (2) selon la revendication 10, **caractérisé en ce que** les deux bases parallèles (31b, 32b) sont sensiblement perpendiculaires à la paroi du conduit tubulaire (2).

12. Conduit tubulaire (2) selon la revendication 10 ou 11, **caractérisé en ce que** la base (31b) de la section trapézoïdale orientée vers l'extrémité de raccordement du conduit tubulaire (2) présente une discontinuité dans sa partie la plus externe.

13. Conduit tubulaire (2) selon l'une quelconque des revendications 10 à 12, **caractérisé en ce que** la base (31b) de la section trapézoïdale orientée vers l'extrémité de raccordement du conduit tubulaire (2) est plus petite que la base (32b) de la section trapézoïdale orientée à l'opposé de l'extrémité de raccordement du conduit tubulaire (2).

14. Conduit tubulaire (2) selon l'une des revendications 10 à 13, **caractérisé en ce que** la base (31b) de la section trapézoïdale orientée vers l'extrémit de raccordement du conduit tubulaire (2) ainsi que le coté interne (31a) non parallèle sont formés par un prolongement du conduit tubulaire (2) et que la base (32b) de la section trapézoïdale orientée à l'opposé de l'extrémité de raccordement du conduit tubulaire (2), le côté externe (32c) non parallèle et son éventuel prolongement transversal (32d) rentrant sont formés par une pièce rapportée à l'extérieur du conduit tubulaire (2).

15. Conduit tubulaire (1, 2) selon l'une quelconque des revendications 6 à 14, **caractérisé en ce que** les prolongements sont fixés au conduit tubulaire (1, 2) par une technique choisie parmi la soudure, le sertissage, l'emboutissage et le collage.

16. Conduit tubulaire (1, 2) selon l'une quelconque des revendications 6 à 14, **caractérisé en ce que** les prolongements sont fixés au conduit tubulaire (1, 2) par des visseries.

17. Conduit tubulaire (1, 2) selon l'une quelconque des revendications 6 à 16, **caractérisé en ce qu'**il comporte une butée (50) permettant un ajustement optimal des éléments de raccordement par rapport à l'extrémité des tubes (1, 2) qui les portent.

## Patentansprüche

1. Verfahren für den Anschluss von Rohrleitungen (1, 2), bestehend aus dem Verlängern von den Enden der Leitungen, die durch ergänzende Verbindungsmittel angeschlossen werden, **dadurch gekennzeichnet, dass** die vorgenannten Mittel bestehen aus einerseits einem erweiterten Rohrverbindungselement, platziert in der Verlängerung des ihn tragenden Rohrs (1), dessen Typ im Längsschnitt fast einer V-Form entspricht, ein Element (11) vom V, das einen nach außen ausgeweiteten Kragen bildet, am Ende mit einer leicht transversalen zurückspringenden Schulter (11c) versehen ist, wobei das andere Element (12) vom V ein konisches, nach innen gekrümmtes, stützendes Rohrteil des vorgenannten Elements bildet, und andererseits aus einem spitzen Rohrverbindungselement (21, 30), platziert in der Verlängerung des ihn tragenden Rohrs (2), dessen distaler Teil komplementär vom erweiterten Rohrverbindungselement ist und sich auf die transversale Schulter (11c) vom erweiterten Rohrverbindungselement stützt.

2. Verfahren nach Anspruch Nr. 1, **dadurch gekennzeichnet, dass** das spitze Rohrverbindungselement (21) einen leicht bogenförmigen Querschnitt aufweist, dessen distaler Teil mit der Achse des ihn tragendes Rohres (2) einen eher zwischen 15 und 45° spitzen Winkel bildet.

3. Verfahren nach Anspruch Nr. 1, **dadurch gekennzeichnet, dass** das spitze Rohrverbindungselement (30) im transversalen Querschnitt eine leicht trapezförmige Form aufweist.

4. Verfahren für den Anschluss von Rohrleitungen nach einem der Ansprüche Nr. 1 bis 3, **dadurch gekennzeichnet, dass** mindestens eine von den Verlängerungen durch die Deformierung der Enden von den Rohrleitungen (1, 2) realisiert wird.

5. Verfahren für den Anschluss von Rohrleitungen nach einem der Ansprüche Nr. 1 bis 3, **dadurch gekennzeichnet, dass** mindestens eine der Verlängerungen in Form von zusätzlichen Teilen realisiert wird, die am Ende der Rohrleitungen (1, 2) befestigt werden.

6. Rohrleitung (1) anschließbar an eine zusätzliche Rohrleitung (2) des Typs mit einem Anschlussmittel, **dadurch gekennzeichnet, dass** sie an ihrem Anschlussende über eine erweiterte Rohrverlängerung verfügt, platziert in der Verlängerung des sie tragenden Rohrs (1), dessen Typ im Längsschnitt fast einer V-Form entspricht, ein Element (11) vom V, das einen nach außen ausgeweiteten Kragen bildet, am Ende mit einer leicht transversalen zurückspringenden Schulter (11c) versehen ist, wobei das andere Element (12) vom V ein konisches, nach innen gekrümmtes, stützendes Rohrteil bildet.

7. Rohrleitung (1) nach Anspruch Nr. 6, **dadurch gekennzeichnet, dass** die leicht transversale zurückspringende Schulter (11c) eine variable Länge auf ihrem Umfang aufweist.

8. Rohrleitung (1) nach Ansprüche Nr. 6 oder 7, **dadurch gekennzeichnet, dass** sie eine laterale Ausdehnung (40) aufweist, die es dem konischen Stützrohrteil erlaubt, die Reduzierung des Durchmessers von der ihn tragenden Rohrleitung zu begrenzen.

9. Rohrleitung (2), anschließbar an eine zusätzliche Rohrleitung (1) des Typs mit einem Anschlussmittel, **dadurch gekennzeichnet, dass** sie an ihrem Anschlussende über einen bogenförmigen Querschnitt verfügt, bestehend aus 5 aufeinander folgenden kontinuierlichen Teilen, bestehend für den ersten Teil (21a) aus einer Verlängerung des ihn tragenden Rohrs (2), für den zweiten Teil (21b) aus einer Verengung des Querschnitts vom Rohr (2), für den dritten Teil (21c) aus einer Ausweitung des Rohrs (2), die in ihrem distalen Teil einen nach außen gekrümmten Rücksprung bildet, für den vierten Teil (21d) eine Verlängerung des vorgenannten Rücksprungs, der mit dem ihn tragenden Rohr (2) einen Winkel zwischen 0 und 90°, vorzugsweise zwischen 15 und 45°, bildet, und für den fünften Teil ein leicht transversales zurückspringendes Ende.

10. Rohrleitung (2), anschließbar an eine zusätzliche Rohrleitung (1) des Typs mit einem Anschlussmittel, **dadurch gekennzeichnet, dass** sie an ihrem Anschlussende über ein Anschlusselement (30) verfügt, das im transversalen Querschnitt eine leicht trapezförmige Form aufweist, der zwei parallele Basen aufweist (31b, 32b).

11. Rohrleitung (2) nach Anspruch Nr. 10, **dadurch gekennzeichnet, dass** die beiden parallelen Basen (31b, 32b) leicht senkrecht zur Wand der Rohrleitung (2) stehen.

12. Rohrleitung (2) nach Anspruch Nr. 10 oder 11, **dadurch gekennzeichnet, dass** die Basis (31b) vom trapezförmigen Querschnitt, der zum Anschlussende der Rohrleitung (2) orientiert ist, in ihrem externsten Teil eine Diskontinuität aufweist.

13. Rohrleitung (2) nach einem der Ansprüche Nr. 10 bis 12, **dadurch gekennzeichnet, dass** die Basis (31b) vom trapezförmigen Querschnitt, der zum Anschlussende der Rohrleitung (2) orientiert ist, kleiner ist als die Basis (32b) vom trapezförmigen Querschnitt, der in entgegen gesetzter Richtung zum Anschlussende der Rohrleitung (2) orientiert ist.

14. Rohrleitung (2) nach einem der Ansprüche Nr. 10 bis 13, **dadurch gekennzeichnet, dass** die Basis (31b) vom trapezförmigen Querschnitt, der zum Anschlussende der Rohrleitung (2) orientiert ist, sowie die interne nicht parallele Seite (31a) aus einer Verlängerung der Rohrleitung (2) gebildet werden und dass die Basis(32b) vom trapezförmigen Querschnitt, der in entgegen gesetzter Richtung zum Anschlussende der Rohrleitung (2) orientiert ist, die externe nicht parallele Seite (32c) und deren mögliche transversale zurückspringende Verlängerung (32d) durch ein loses Teil außerhalb der Rohrleitung (2) gebildet werden.

15. Rohrleitung (1, 2) nach einem der Ansprüche Nr. 6 bis 14, **dadurch gekennzeichnet, dass** die Verlängerungen an der Rohrleitung (1, 2) anhand einer Technik befestigt werden, die zwischen den Techniken Schweißen, Einwalzen, Formtreiben und Verkleben zu wählen ist.

16. Rohrleitung (1, 2) nach einem der Ansprüche Nr. 6 bis 14, **dadurch gekennzeichnet, dass** die Verlängerungen an der Rohrleitung (1, 2) durch Verschrauben befestigt werden.

17. Rohrleitung (1, 2) nach einem der Ansprüche Nr. 6 bis 16, **dadurch gekennzeichnet, dass** sie einen Anschlag (50) aufweist, der eine optimale Einstellung der Anschlusselemente im Verhältnis zu den sie tragenden Rohrenden (1, 2) erlaubt.

## Claims

1. Process for connection of tubular ducts (1, 2) consisting of prolonging the ends of the ducts to be connected by complementary connecting means, **characterized in that** the said means are composed firstly of a female tubular connection element, placed along the extension of the line of the tube (1) that supports it, of the type with an approximately V-shaped longitudinal cut, an element (11) of the V forming a collar flared outwards, terminated by an approximately transverse re-entrant shoulder (11c) the other element (12) of the V forming a conical tubular support part, with an elbow towards the inside of the said element, and secondly of a male tubular connection element (21, 30) placed along the extension of the line of the tube (2) that supports it, the distal part of which is complementary to the female tubular connection element and which bears on the transverse shoulder (11c) of the female tubular connection element.

2. Method according to claim 1, **characterized in that** the male tubular connection element (21) has an approximately walking stick shaped section, the distal part of which makes an acute angle with the axis of the tube (2), preferably between 15 and 45°.

3. Method according to claim 1, **characterized in that** the male tubular connection element (30) has an approximately trapezoidal shaped cross section.

4. Method for connection of tubular ducts according to any one of claims 1 to 3, **characterised in that** at least one of the extensions is made by deformation of the ends of the tubular ducts (1, 2).

5. Method for connecting tubular ducts according to any one of claims 1 to 3, **characterized in that** at least one of the extensions is made in the form of additional parts fixed to the end of the tubular ducts (1, 2).

6. Tubular duct (1) connectable to a complementary tubular duct (2) of the type comprising connection means, **characterized in that** it has a female tubular extension at its connection end, placed along the line of the tube (1) that supports it, of the type with an approximately V-shaped longitudinal section, an element (11) of the V forming a collar flared outwards terminated by an approximately transverse re-entrant shoulder (11c) the other element (12) of the V forming a conical tubular bearing part bent inwards.

7. Tubular duct (1) according to claim 6, **characterized in that** the approximately transverse re-entrant shoulder (11c has a variable length around its circumference.

8. Tubular duct (1) according to claim 6 or 7, **characterized in that** it has a lateral expansion (40) enabling the conical tubular bearing part to limit the reduction in the diameter of the tubular duct on which it is supported.

9. Tubular duct (2) that can be connected to a complementary tubular duct (1) of the type comprising a connecting means, **characterized in that** it has a walking stick shaped section at its connection end comprising five successive continuous parts, the first part (21a) consisting of an extension of the tube (2) on which it is fitted, the second part (21b) consisting of a narrowing of the section of the tube (2), the third part (21c) consisting of a flaring of the tube (2) forming a cranked return bent outwards at its distal part, the fourth part (21d) consisting of an extension of the said return forming an angle with the axes of the tube (2) on which it is fitted equal to between 0 and 90°, and preferably between 15 and 45°, and the fifth part consisting of an approximately transverse re-entrant end.

10. Tubular duct (2) connectable to a complementary tubular duct (1) of the type comprising connection means, **characterized in that** its connection end comprises a connection element (30) with an approximately trapezoidal cross section, with two parallel bases (31b, 32b).

11. Tubular duct (2) according to claim 10, **characterized in that** the two parallel bases (31b, 32b) are approximately perpendicular to the wall of the tubular duct (2).

12. Tubular duct (2) according to claim 10 or 11, **characterized in that** the base (31b) of the trapezoidal section facing towards the connection end of the tubular duct (2) has a discontinuity in its outermost part.

13. Tubular duct (2) according to any one of claims 10 to 12_{,} **characterized in that** the base (31b) of the trapezoidal section located towards the connection end of the tubular duct (2) is smaller than the base (32b) of the trapezoidal section oriented in the direction opposite to the connection end of the tubular duct (2).

14. Tubular duct (2) according to any one of claims 10 to 13, **characterized in that** the base (31b) of the trapezoidal section located towards the connection end of the tubular duct (2) and the non-parallel inner side (31a) are formed by an extension of the tubular duct (2) and that the base (32b) of the trapezoidal section oriented in the direction opposite to the connection end of the tubular duct (2), the non-parallel external side (32c) and its re-entrant transverse extension (32d) if any, are formed by an add-on piece outside the tubular duct (2).

15. Tubular duct (1, 2) according to any one of claims 6 to 14, **characterized in that** the extensions are fixed to the tubular duct (1, 2) using a technique chosen from among welding, crimping, stamping and gluing.

16. Tubular duct (1, 2) according to any one of claims 6 to 14, **characterized in that** the extensions are fixed to the tubular duct (1, 2) by screw fasteners.

17. Tubular duct (1, 2) according to any one of claims 6 to 16, **characterized in that** it comprises a stop (50) enabling optimum adjustment of connection elements with respect to the end of the tubes (1, 2) on which they are supported.
